# EUROPEAN PATENT APPLICATION

(11) **EP 2 701 372 A1**
(43) Date of publication of application: **26.02.2014**
(21) Application number: 12181016.2
(22) Date of filing: 20.08.2012
(51) Int. Cl.: H04M 1/656

(54) **Methods and devices for storing recognized phrases**

(71) Applicant: BlackBerry Limited, Waterloo, ON N2K 0A7 (CA)
(72) Inventor: Walker, David Ryan, Waterloo, Ontario N2L 3W8 (CA); Pasquero, Jerome, Montreal, Québec H2Y 2P5 (CA)
(74) Representative: Patel, Binesh

(57) **Abstract**

Methods and electronic devices for storing recognized phrases during a voice call between an electronic device and a remote party. In one aspect, the present application discloses a method implemented by a processor of an electronic device for storing recognized phrases during a voice call between the electronic device and a remote party. In one aspect, a method implemented by a processor of an electronic device is described. The method includes: determining that a spoken phrase during the voice call is within a pre-determined category of information; converting the spoken phrase to text; storing the text in association with the voice call; and displaying in a graphical user interface a call history identifying previous voice calls, including an identifier of the voice call. The display includes displaying the text in association with the identifier of the voice call.

## Description

### TECHNICAL FIELD

The present application relates to voice communication management and more particularly to methods and electronic devices for storing recognized phrases during a voice call.

### BACKGROUND

Electronic devices such as smart phones are often equipped for data and voice communication capabilities. That is, an electronic device may be capable of communicating with other electronic devices via data and voice communications. For example, in the data communication mode, the electronic device may be capable of exchanging text messages, email messages, etc. with other electronic devices. In the voice communication mode, the electronic device may provide telephony functions allowing the electronic device to send and receive voice communications that are exchanged with other electronic devices. For example, a user of the electronic device may carry-out a voice call with a user of another electronic device.

During a voice call, users may communicate various types of information with one another via the electronic devices. For example, users may communicate information to other users that they would like to be recorded. For example, a first user may communicate a phone number and/or an address to a second user, and the second user would like to record the communicated phone number and/or address for later reference. In order to record the communicated phone number and/or address, the second user may manually record this information (such as by manually inputting the information into the second user's communication enabled electronic device or another associated electronic device, and/or recording the information on a piece of paper during or after the voice call). However, the manual entry of information is often prone to typographical errors, and can be a tedious and cumbersome process.

### BRIEF SUMMARY

In one aspect, the present application describes a method implemented by a processor of an electronic device for storing recognized phrases during a voice call between the electronic device and a remote party. The electronic device has a display. The method includes: determining that a spoken phrase during the voice call is within a pre-determined category of information; converting the spoken phrase to text; storing the text in association with the voice call; and displaying in a graphical user interface a call history identifying previous voice calls, including an identifier of the voice call. The display includes displaying the text in association with the identifier of the voice call.

In another aspect, the present application describes an electronic device configured to store recognized phrases during a voice call between the electronic device and a remote party. The electronic device includes a display and a memory. The electronic device also includes a processor coupled with the display and the memory. The processor is configured to: determine that a spoken phrase during the voice call is within a pre-determined category of information; convert the spoken phrase to text; store the text in association with the voice call; and display in a graphical user interface a call history identifying previous voice calls, including an identifier of the voice call. The display includes displaying the text in association with the identifier of the voice call.

In yet another aspect, the present application describes a method implemented by a processor of an electronic device for storing recognized phrases during a voice call between the electronic device and a remote party. The method includes: establishing a connection with a second electronic device; receiving text from the second electronic device, wherein the received text is based on the second electronic device determining that a spoken phrase during a voice call between the electronic device and a remote party is within a pre-determined category of information, and converting the spoken phrase to text; storing the text in association with the voice call; and displaying in a graphical user interface a call history identifying previous calls, including an identifier of the voice call. The display includes displaying the text in association with the identifier of the voice call.

Other example embodiments of the present disclosure will be apparent to those of ordinary skill in the art from a review of the following detailed description in conjunction with the drawings.

Example embodiments of the present disclosure are not limited to any particular operating system, electronic device architecture, server architecture or computer programming language.

### BRIEF DESCRIPTION OF THE DRAWINGS

Reference will now be made, by way of example, to the accompanying drawings which show example embodiments of the present application, and in which:

FIG. 1 is a block diagram illustrating an example electronic device in accordance with example embodiments of the present disclosure;

FIG. 2 is an example display page of a call history on a display of the example electronic device in accordance with example embodiments of the present disclosure;

FIG. 3 is a flowchart illustrating an example method of storing recognized phrases during a voice call in accordance with example embodiments of the present disclosure;

FIG. 4 is another example display page of the call history on the display of the example electronic device in accordance with example embodiments of the present disclosure; and

FIG. 5 is a further example display page of the call history on the display of the example electronic device in accordance with example embodiments of the present disclosure.

Like reference numerals are used in the drawings to denote like elements and features.

### DETAILED DESCRIPTION

### Example Electronic Device

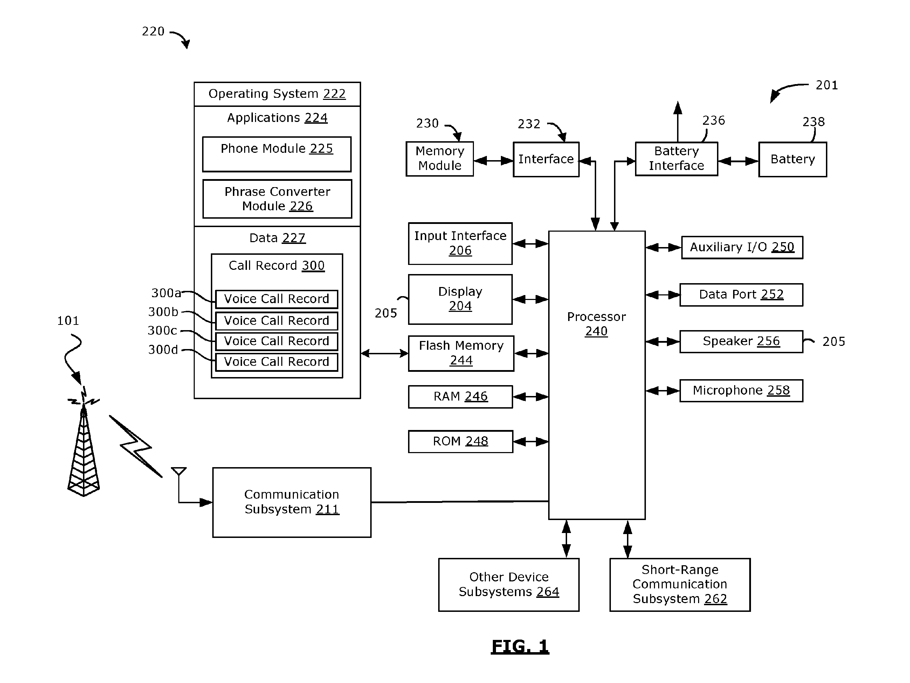

Reference is first made to FIG. 1 which illustrates an example electronic device 201. In the illustrated example embodiment, the electronic device 201 is a communication device, such as a mobile communication device. In at least some example embodiments, the electronic device 201 is a two-way communication device having data and voice communication capabilities, and the capability to communicate with other computer systems, for example, via the Internet. Depending on the functionality provided by the electronic device 201, in various example embodiments the electronic device 201 may be a multiple-mode communication device configured for data and voice communications, a mobile telephone such as a smart phone, a tablet computer such as a slate computer, a wearable computer such as a watch, a PDA (personal digital assistant), or a computer system. In other example embodiments, the electronic device 201 may be of a type not specifically listed above.

The electronic device 201 includes a housing (not shown), housing the components of the electronic device 201. The internal components of the electronic device 201 are constructed on a printed circuit board (PCB). The electronic device 201 includes a controller including at least one processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 interacts with additional device subsystems including one or more input interfaces 206 (such as a keyboard, one or more control buttons, one or more microphones 258, and/or a touch-sensitive overlay associated with a touchscreen display), flash memory 244, random access memory (RAM) 246, read only memory (ROM) 248, auxiliary input/output (I/O) subsystems 250, a data port 252 (which may be a serial data port, such as a Universal Serial Bus (USB) data port), one or more output interfaces 205 (such as a display 204 (which may be a liquid crystal display (LCD)), one or more speakers 256, or other output interfaces 205), a short-range communication subsystem 262, and other device subsystems generally designated as 264. Some of the subsystems shown in FIG. 1 perform communication-related functions, whereas other subsystems may provide "resident" or on-device functions.

The electronic device 201 includes a touchscreen display. The touchscreen display may be constructed using a touch-sensitive input surface connected to an electronic controller. The touch-sensitive input surface overlays the display 204 and may be referred to as a touch-sensitive overlay. The touch-sensitive overlay and the electronic controller provide a touch-sensitive input interface and the processor 240 interacts with the touch-sensitive overlay via the electronic controller. That is, the touchscreen display acts as both an input interface 206 and an output interface 205.

The electronic device 201 is connected to a communication network such as a wireless network 101 which may include one or more of a Wireless Wide Area Network (WWAN) and a Wireless Local Area Network (WLAN) or other suitable network arrangements. In at least some example embodiments, the electronic device 201 is configured to communicate over both the WWAN and WLAN, and to roam between these networks. In at least some example embodiments, the wireless network 101 may include multiple WWANs and WLANs.

The particular design of the wireless communication subsystem 211 depends on the wireless network 101 in which the electronic device 201 is intended to operate. The electronic device 201 may send and receive communication signals over the wireless network 101 after the required network registration or activation procedures have been completed.

In at least some example embodiments, the auxiliary input/output (I/O) subsystems 250 may include an external communication link or interface, for example, an Ethernet connection. The electronic device 201 may include other wireless communication interfaces for communicating with other types of wireless networks, for example, a wireless network such as an orthogonal frequency division multiplexed (OFDM) network. The auxiliary I/O subsystems 250 may include a pointing or navigational tool (input device) such as a clickable trackball or scroll wheel or thumbwheel, or a vibrator for providing vibratory notifications in response to various events on the electronic device 201 such as receipt of an electronic message or incoming phone call, or for other purposes such as haptic feedback (*i.e.* touch feedback).

In at least some example embodiments, the electronic device 201 also includes a removable memory module 230 (typically including flash memory) and a memory module interface 232. Network access may be associated with a subscriber or user of the electronic device 201 via the memory module 230, which may be a Subscriber Identity Module (SIM) card for use in a GSM network or other type of memory module for use in the relevant wireless network. The memory module 230 may be inserted in or connected to the memory module interface 232 of the electronic device 201.

The electronic device 201 may store data 227 in an erasable persistent memory, which in one example embodiment is the flash memory 244. In various example embodiments, the data 227 may include service data having information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory (e.g. flash memory 244) of the electronic device 201 may be organized, at least partially, into a number of databases or data stores each containing data items of the same data type or associated with the same application. For example, email messages, contact records, voice call records 300a, 300b, 300c, 300d and task items may be stored in individual databases within the memory of the electronic device 201. By way of example, voice call records 300a, 300b, 300c, 300d may be stored in a call record data store 300 which may be a database which is configured for storing the voice call records 300a, 300b, 300c, 300d.

In at least some example embodiments, the electronic device 201 is provided with a service routing application programming interface (API) which provides an application with the ability to route traffic through a serial data (i.e., USB) or Bluetooth^{®} (Bluetooth^{®} is a registered trademark of Bluetooth SIG, Inc.) connection to the host computer system using standard connectivity protocols.

The electronic device 201 also includes a battery 238 as a power source, which is typically one or more rechargeable batteries that may be charged, for example, through charging circuitry coupled to a battery interface 236 such as the serial data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The short-range communication subsystem 262 is an additional optional component which provides for communication between the electronic device 201 and different systems or devices, which need not necessarily be similar devices. For example, the short-range communication subsystem 262 may include an infrared device and associated circuits and components, or a wireless bus protocol compliant communication mechanism such as a Bluetooth^{®} communication module to provide for communication with similarly-enabled systems and devices.

A pre-determined set of applications that control basic device operations, including data and possibly voice communication applications may be installed on the electronic device 201 during or after manufacture. Additional applications and/or upgrades to an operating system 222 or software applications 224 may also be loaded onto the electronic device 201 through the wireless network 101, the auxiliary I/O subsystem 250, the data port 252, the short-range communication subsystem 262, or other suitable device subsystems 264. The downloaded programs or code modules may be permanently installed, for example, written into the program memory (i.e. the flash memory 244), or written into and executed from the RAM 246 for execution by the processor 240 at runtime.

In at least some example embodiments, the electronic device 201 may provide two principal modes of communication: a data communication mode and a voice communication mode. In the data communication mode, a received data signal such as a text message, an email message, or a web page download will be processed by the wireless communication subsystem 211 and input to the processor 240 for further processing. For example, a downloaded web page may be further processed by a browser application or an email message may be processed by the email messaging application and output to the display 204. A user of the electronic device 201 may also compose data items, such as email messages, for example, using an input interface 206. These composed items may be transmitted through the wireless communication subsystem 211 over the wireless network 101.

In the voice communication mode, the electronic device 201 provides telephony functions and operates as a typical cellular phone. The overall operation is similar to the data communication mode, except that the received signals would be output to the speaker 256 and signals for transmission would be generated by a transducer such as the microphone 258. The telephony functions are provided by a combination of software/firmware (*i.e*., a voice communication module such as a phone module 225) and hardware (*i.e*., the microphone 258, the speaker 256 and input devices). Alternative voice or audio I/O subsystems, such as a voice message recording subsystem, may also be implemented on the electronic device 201. Although voice or audio signal output is typically accomplished primarily through the speaker 256, the display 204 may also be used to provide voice call related information (such as a call history) and phone related features and functions (such as a virtual telephone keypad).

The processor 240 operates under stored program control and executes software modules 220 stored in memory such as persistent memory, for example, in the flash memory 244. As illustrated in FIG. 1, the software modules 220 include operating system software 222, and software applications 224 including the phone module 225 and a phrase converter module 226. In the example embodiment of FIG. 1, the phone module 225 and the phrase converter module 226 are implemented as separate stand-alone applications 224, but in other example embodiments, the phone module 225 and the phrase converter module 226 may be implemented as one module and/or individually or together as part of the operating system 222 or another application 224.

The electronic device 201 may include a range of additional software applications 224, including, for example, a notepad application, a contact records application (which may perform the functions of an address book and allows contact records to be created and stored), a calendar application (which may allow event records to be created and stored), a mapping application, or a media player application, or any combination thereof. Each of the software applications 224 may include layout information defining the placement of particular fields and graphic elements (for example, text fields, input fields, icons, etc.) in a graphical user interface (GUI) associated with the application. A GUI is a type of user interface that allows the user to interact with a device and/or an application utilizing images, icons, text and other selectable graphical elements. The GUI represents information and actions available to the user through graphical icons and visual indicators. The GUI can be implemented by various programming languages including JavaScript, .NET, C++, etc. For example, the phone module 225 may provide a GUI that displays a call history with the associated information presented in a particular format in the GUI on the display 204.

The software modules 220 or parts thereof may be temporarily loaded into volatile memory such as the RAM 246. The RAM 246 is used for storing runtime data variables and other types of data or information. Although specific functions are described for various types of memory, this is merely one example, and a different assignment of functions to types of memory could also be used.

The phone module 225 provides voice communication functions and features for the electronic device 201. As mentioned above, the phone module 225 may interface with various hardware (such as, the microphone 258 and the speaker 256) to provide voice communication services via the wireless communication subsystem 211 over the wireless network 101 in order to access the public switched telephone network (PSTN) or other wireless networks. For example, the phone module 225 allows the electronic device 201 to make and receive telephone calls with other electronic devices. The phone module 225 may provide other voice communication related features such as conference calling, call waiting, voice messaging, etc.

The phone module 225 may provide a telephone keypad that is displayable in a GUI. The telephone keypad may include numeric characters and symbols, and each of these numeric characters and symbols may be associated with an interface element on the GUI. A user may select these interface elements in order to input the associated numeric characters and symbols. Accordingly, a user may, for example, use the telephone keypad to dial a telephone number, to make a selection in an automated voice call, etc.

Additionally, the phone module 225 may provide voice call related information on the display 204 (for example, in a GUI on the display 204). The voice call related information may include caller (or receiver) related information such as the identity of the caller (or receiver), the phone number associated with the caller's (or receiver's) electronic device and other caller (or receiver) related information. In at least some example embodiments, the caller (or receiver) related information may be retrieved by the phone module 225 from a contact record associated with the caller (or receiver), and accordingly displayed.

The voice call related information may also include a call history. The call history identifies previous voice calls, and may include one or more identifiers that identify each previous voice call. The identifiers may include one or more of an identity of the caller (or receiver), a phone number associated with the caller's (or receiver's) electronic device, duration of the voice call, date of the voice call, start time of the voice call, etc. Accordingly, for example, the call history may be provided as a list of each previous voice call identified by one or more identifiers that is displayable in a GUI. In at least some example embodiments, each previous voice call (and the associated one or more identifiers) in the call history may be associated with a voice call record 300a, 300b, 300c, 300d. The phone module 225 may automatically create a voice call record 300a, 300b, 300c, 300d as a voice call is completed. The created voice call records 300a, 300b, 300c, 300d may be stored in a call record data store 300 in the data area 227 of memory.

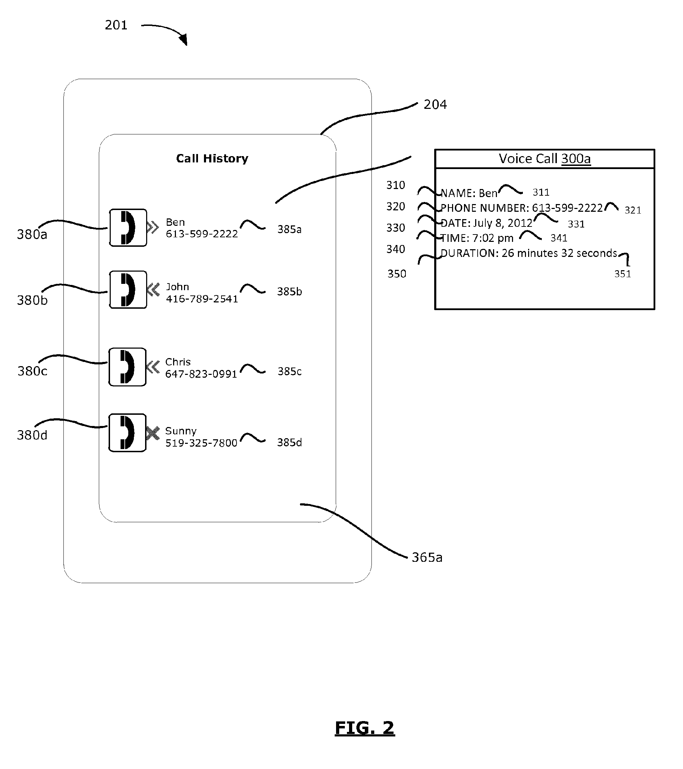

Voice call records 300a, 300b, 300c, 300d are records which store voice call related information. The voice call related information may include information related to the voice call. Such information may, for example, include the identity of the caller (or receiver), a phone number associated with the caller's (or receiver's) electronic device, duration of the voice call, date of the voice call, start time of the voice call, and other voice call related information. In at least some example embodiments, the voice call related information may be obtained from an associated contact record of the caller (or receiver) of the voice call. An example voice call record 300a, 300b, 300c, 300d will be discussed in greater detail below with reference to FIG. 2.

In at least some example embodiments, after the voice call records 300a, 300b, 300c, 300d are created, they may be accessed by the phone module 225. For example, a user may interact with a GUI displaying a call history (for example, via an input interface 206) provided by the phone module 225 in order to access the voice call records 300a, 300b, 300c, 300d. In such example embodiments, the phone module 225 may retrieve and display the appropriate voice call record 300a, 300b, 300c, 300d based on the instruction of the user interacting with the GUI.

In at least some example embodiments, the voice call records 300a, 300b, 300c, 300d may be accessed by other applications 224. For example, the voice call records 300a, 300b, 300c, 300d may be accessed by the phrase converter module 226, the details of which are provided below. In at least some example embodiments, some applications 224 may access the voice call records 300a, 300b, 300c, 300d directly. In at least some example embodiments, the phone module 225 may control access to the voice call records 300a, 300b, 300c, 300d. In such example embodiments, other applications 224 may access the voice call records 300a, 300b, 300c, 300d by requesting access from the phone module 225 and the phone module 225 provides the access.

In the illustrated example, four voice call records 300a, 300b, 300c, 300d are shown including a first voice call record 300a, a second voice call record 300b, a third voice call record 300c, and a fourth voice call record 300d. However, the call record data store 300 may store more or less voice call records 300a, 300b, 300c, 300d than are shown in FIG. 1. It will be appreciated that these voice call records 300a, 300b, 300c, 300d may be added to (for example, after the completion of a voice call), deleted and/or modified.

The phrase converter module 226 may be configured to store recognized phrases during a voice call. More specifically, in at least some example embodiments, the phrase converter module 226 includes a speech recognition component configured to detect a spoken phrase during a voice call between the electronic device 201 and a remote party (which may include another electronic device capable of voice communication). The phrase converter module 226 may be configured to recognize certain pre-determined categories of information, such as name and contact information, as applied to all speech in general. In at least some example embodiments, the spoken phrases detected by the phrase converter module 226 may include any one of a name, a postal address, an email address and/or a phone number. To detect the spoken phrase, the phrase converter module 226 may apply one or more pre-determined rules to assist in recognizing speech that fits within the pre-determined categories. For example, the phrase converter module 226 may base the detection on a geographic location of the electronic device 201. For example, only spoken phrases correlating to a postal address or phone number that are within a certain proximity to the geographic location of the electronic device 201 are selected. Upon detection of the spoken phrase, the phrase converter module 226 may convert the spoken phrase to text, and store the text in association with the voice call. For example, a voice call record may be created for the voice call (for example, by the phone module 225) and the phrase converter module 226 may include the converted text in the voice call record.

As mentioned above, the phone module 225 may display in a GUI a call history identifying previous voice calls. The previous voice calls are graphically indicated using one or more identifiers of the respective previous call. Accordingly, in at least some example embodiments, after the phrase converter module 226 stores the converted text in association with the voice call, the phone module 225 may display the text in association with the display of the identifier of the voice call within the call history. For example, the text may be displayed within a displayed voice call record associated with the voice call.

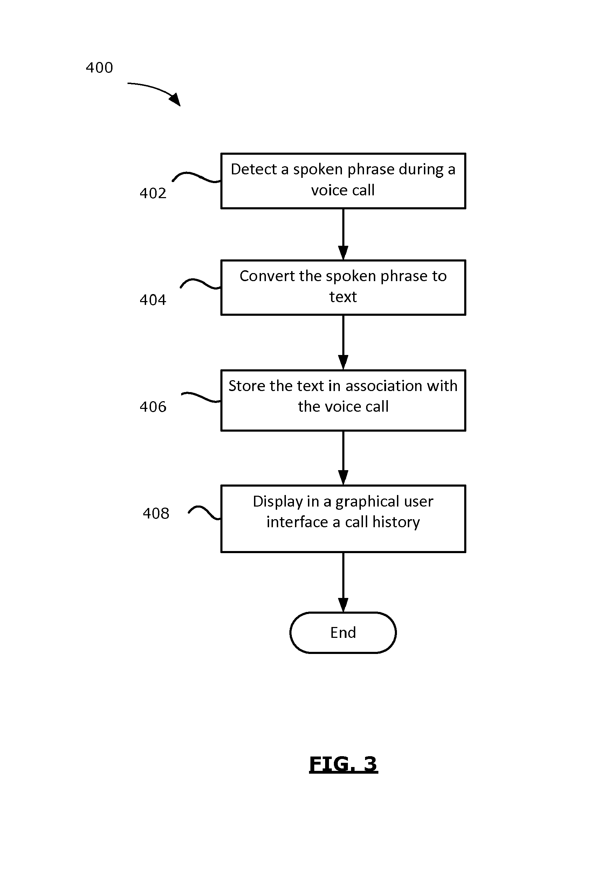

Specific functions and features of the phone module 225 and the phrase converter module 226 will be discussed in greater detail below with reference to FIGs. 3 to 5.

In at least some example embodiments, the operating system 222 may perform some or all of the functions of the phone module 225 and/or the phrase converter module 226. In other example embodiments, the functions or a portion of the functions of the phone module 225 and/or the phrase converter module 226 may be performed by one or more other applications. Further, while the phone module 225 and/or the phrase converter module 226 have each been illustrated as a single block, the phone module 225 and/or the phrase converter module 226 may include a plurality of software modules. In at least some example embodiments, these software modules may be divided among multiple applications.

### Example Display Page of a Call History

Reference is next made to FIG. 2 which shows an example display page 365a of a call history on the display 204 of the electronic device 201. The display page 365a may be provided as a GUI by the phone module 225. The display page 365a includes a list of interface elements 380a, 380b, 380c, 380d that are each associated with an identifier 385a, 385b, 385c, 385d of a respective previous call. An interface element is a user selectable portion of the display 204. The interface elements 380a, 380b, 380c, 380d may, for example, include a button, icon, text, hyperlink, area nearby the identifier 385a, 385b, 385c, 385d, or another portion which may be selected and which is associated with a voice call record. One or more of the identifiers 385a, 385b, 385c, 385d themselves may be the selectable interface elements 380a, 380b, 380c, 380d in some example embodiments. The identifiers 385a, 385b, 385c, 385d may identify the associated voice call, and may, for example, include one or more of an identity of the caller (or receiver), a phone number associated with the caller's (or receiver's) electronic device, duration of the voice call, date of the voice call, start time of the voice call, etc. Additionally, the identifiers 385a, 385b, 385c, 385d may convey a status of the associated voice call (for example, identifier 385a may depict an outgoing voice call (*i.e.* the electronic device 201 initiated the voice call), identifiers 385b and 385c may depict an incoming voice call (*i.e.* the electronic device 201 received the voice call), and identifier 385d may depict a cancelled voice call (*i.e.* the voice call did not take place)). The interface elements 380a, 380b, 380c, 380d and the associated identifiers 385a, 385b, 385c, 385d for voice calls may each be associated with a voice call record 300a, 300b,300c,300d.

The interface elements 380a, 380b, 380c, 380d may be selectable by a user. For example, a user may select the interface elements 380a, 380b, 380c, 380d by inputting an instruction via an input interface 206 associated with the electronic device 201. For example, the instruction may be received from a navigational input device, such as a trackball, a track pad or a touchscreen display, or a physical keyboard associated with the electronic device 201 to select the interface elements 380a, 380b, 380c, 380d. In response to the selection, in at least some example embodiments, the voice call record 300a, 300b, 300c, 300d associated with the interface element 380a, 380b, 380c, 380d may be displayed. In at least some example embodiments, the selected voice call record 300a, 300b, 300c, 300d may be displayed as an overlay to the call history, within the call history GUI, or as a separate display page or GUI.

The voice call records 300a, 300b, 300c, 300d may include voice call related information (*i.e*. information related to the voice call). The voice call records 300a, 300b, 300c, 300d may include a plurality of fields, including, for example, a name field 310 which may store a name 311 defining the identity of the remote party in the voice call if known, a phone number field 320 which may store a phone number 321 associated with the remote party's electronic device, a date field 330 which may store a date 331 of the voice call, a time field 340 which may store a time 341 of initiation of the voice call, and a duration field 350 which may store a duration 351 of the voice call. The voice call records 300a, 300b, 300c, 300d may also include other fields for storing other voice call related information not specifically listed above. In at least some example embodiments, one or more fields (such as the date field 330, time field 340 and/or the duration field 350) may be populated by the phone module 225 based on characteristics of the associated voice call. In at least some example embodiments, one or more of fields (such as the name field 310 and/or the phone number field 320) may be populated by the phone module 225 by extracting information from an associated contact record (which may be stored in memory of the electronic device 201) of the remote party of the voice call.

It will be appreciated that the example display page 365a of the call history shown in FIG. 2 is provided for illustration purposes only, and the example display page 365a of the call history may be of different layouts and graphical designs.

### Storing Recognized Phrases

Referring now to FIG. 3, a flowchart of an example method 400 of storing recognized phrases during a voice call is illustrated. The electronic device 201 (FIG. 1) may be configured to perform the method 400 of FIG. 3. In at least some example embodiments, the processor 240 of the electronic device 201 is configured to perform the method 400 of FIG. 3. One or more applications 224 or modules on the electronic device 201 may contain computer readable instructions which cause the processor 240 of the electronic device 201 to perform the method 400 of FIG. 3. In at least some example embodiments, the phone module 225 and/or the phrase converter module 226 stored in memory of the electronic device 201 is configured to perform the method 400 of FIG. 3. More particularly, the phone module 225 and/or the phrase converter module 226 may contain computer readable instructions which, when executed, cause the processor 240 to perform the method 400 of FIG. 3. It will be appreciated that the method 400 of FIG. 3 may, in at least some example embodiments, be provided by other software applications 224 or modules apart from those specifically discussed above, such as the operating system 222. Accordingly, any features which are referred to as being performed by the electronic device 201 may be performed by any one or more of the software applications 224 or modules referred to above or other software modules.

In at least some example embodiments, at least some of the method 400 of FIG. 3 may be performed by or may rely on other applications 224 or modules which interface with the phone module 225 and/or the phrase converter module 226. For example, the phone module 225 and/or the phrase converter module 226 may be equipped with an application programming interface (API) which allows other software applications 224 or modules to access features of the phone module 225 and/or the phrase converter module 226.

The method 400 includes, at 402, the electronic device 201 detecting a spoken phrase during a voice call between the electronic device 201 and a remote party. For example, the electronic device 201 may monitor the voice call for one or more spoken phrases. That is, the electronic device 201 may monitor the voice conversation between a user of the electronic device 201 and a user of another electronic device (*i.e*. the remote party) for one or more spoken phrases. The electronic device 201 may detect a spoken phrase whenever either of the users utter the spoken phrase.

In the example embodiment described below, the electronic device 201 detects a spoken phrase and converts it to text. The spoken phrase is a phrase that falls within one of the pre-determined categories of information that the electronic device 201 is configured to recognize and record. In another example embodiment, the electronic device 201 converts all detected speech to text and attempts to identify or detect a spoken phrase that falls within the pre-determined categories of information by searching or parsing the text. In either case, one or more voice recognition and/or speech-to-text algorithms may be used by the device to detect and convert speech during the voice call to text. Details of such algorithms will be familiar to those ordinarily skilled in the art and will not be provided herein.

The spoken phrases may include any one of a postal address, an email address and/or a phone number. For example, a user of the electronic device 201 and/or the remote party may say a postal address, an email address and/or a phone number during the voice call which is detected by the electronic device 201. It will be appreciated that the detected spoken phrases may include other phrases not specifically described herein such as a uniform resource locator (URL) of a website, for example.

In at least some example embodiments, in detecting the spoken phrase, the electronic device 201 may apply one or more pre-determined rules. For example, in at least some example embodiments, the detection may be based on the characteristics of the spoken phrase. That is, when phrases are spoken during a voice call, the electronic device 201 may determine whether the phrases meet a certain criteria. If the phrases meet the criteria, a spoken phrase is detected. As described above, these same rules may be applied to an embodiment in which the speech is first converted to text and then searched for phrases meeting the criteria.

For example, the electronic device 201 may recognize a postal address if the spoken phrase (or converted text) includes the format of a postal address. For example, the postal address may have a number (which may define the building number), a name (which may define the street name), a street name suffix (for example, street, avenue, boulevard, road, etc.), a postal or zip code, a township name, a provincial or state name, and/or a country name. It will be appreciated that the postal address may have a different format than the format described above. Accordingly, if the phrases in the voice call include the format of a postal address, the electronic device 201 may determine a postal address. In at least some example embodiments, the electronic device 201 may detect a postal address even if only a portion of the postal address is spoken. For example, the electronic device 201 may detect a postal address if only a number, name and street name suffix are spoken during the voice call.

As mentioned above, the spoken phrase may include an email address. In such example embodiments, the electronic device 201 may recognize an email address if the spoken phrase includes the format of an email address. For example, an email address may have a name (which may define the username portion), followed by "at" (*i.e.* the "@" symbol), then another name, and then followed by a domain name syntax (such as .com, .ca, .net, etc.). Accordingly, if the phrases in the voice call include the format of an email address, the electronic device 201 may determine an email address.

The spoken phrase may also include a phone number. In such example embodiments, the electronic device 201 may recognize a phone number if the spoken phrase includes the format of a phone number. For example, a phone number may include nine or ten numbers. Accordingly, if the phrases in the voice call include the format of a phone number the electronic device 201 may determine a phone number.

In at least some example embodiments, the detection may be based on the accuracy of the spoken phrase. That is, when phrases are spoken during a voice call, the electronic device 201 may verify the phrases to determine whether they are considered a detected spoken phrase. For example, a postal address that is fully or partially spoken may be verified to determine whether the postal address is in existence. In such example embodiments, the electronic device 201 may check the full or partial postal address in a mapping application (for example, Google Maps^{®}) to determine whether the postal address is in existence. If the spoken full or partial postal address is determined to exist, the electronic device 201 may detect a postal address. However, if the spoken full or partial postal address is determined to not exist, the electronic device 201 may not detect a postal address.

In at least some example embodiments, the detection may be based on a geographic location of the electronic device 201. That is, when phrases are spoken during a voice call, the electronic device 201 may determine whether the phrases are correlated to the location of the electronic device 201. For example, a postal address and/or a phone number that is spoken may be analyzed to determine whether the postal address and/or phone number is within a certain proximity to the electronic device 201. In such example embodiments, the electronic device 201 may determine its geographic location by a navigational application (for example, a Global Positioning System (GPS) application). If it is determined that the spoken postal address and/or phone number is in proximity to the electronic device 201, the postal address and/or phone number may be detected. However, if the spoken postal address and/or phone number is not in proximity to the electronic device 201, the postal address and/or phone number may not be detected.

It will be appreciated that the electronic device 201 may apply other pre-determined rules not specifically described herein. Additionally, some implementations may apply one or more of the example pre-determined rules. For example, some implementations may combine the one or more pre-determined rules into a compound rule.

In at least some example embodiments, the electronic device 201 may detect a plurality of spoken phrases during the voice call. For example, the electronic device 201 may detect more than one postal address, email address and/or phone number during the voice call.

In this example embodiment, after detecting a spoken phrase, the electronic device 201, at 404, converts the spoken phrase to text. That is, the detected spoken phrase such as a postal address, email address and/or phone number is converted to a textual format. In at least some example embodiments, a plurality of detected spoken phrases are converted to text. As noted above, in another example embodiment, speech during the voice call is converted to text and the text is then searched to detect phrases that meet the pre-determined rules.

It will be appreciated that in at least some example embodiments, the determination process of a spoken phrase (which may include the detection process described at 402) and/or the conversion process of a spoken phrase to text (which may include the conversion process described at 404) may be fully or partially performed by one or more other electronic devices. For example, in at least some example embodiment, the electronic device 201 may initially establish a communication link (*i.e*. connection) with another electronic device (for example, by a pairing process). After a communication link is established, the electronic device 201 may collaborate with the other electronic device when performing the determination process and/or conversion process. For example, one or more portions of the determination process and/or conversion process may be performed by the electronic device 201 while the remaining portions of the determination process and/or conversion process may be performed by the other electronic device 201.

In at least some example embodiments, after the communication link is established between the electronic device 201 and the other electronic device, the other electronic device 201 may instead completely perform the determination process and/or conversion process. For example, the other electronic device 201 may monitor a voice call between the electronic device 201 and a remote party (upon initiation of the voice call) for a spoken phrase that falls within pre-determined categories of information, on the electronic device 201 when performing the determination process. In at least some example embodiments, the other electronic device may also convert the detected spoken phrases to text when performing the conversion process. In such example embodiments, the other electronic device 201 may then provide the converted text to the electronic device 201 upon completion of the detection process and the conversion process.

At 406, the electronic device 201 stores the converted text in association with the voice call. For example, the converted text may be stored in a voice call record associated with the voice call (for example, in the memory of the electronic device 201).

The electronic device 201, at 408, displays in a GUI a call history. The call history identifies previous voice calls, and may include one or more identifiers each identifying the previous voice calls. For example, the call history may display a list of identifiers that each identify a voice call. The call history further displays the text in association with the identifier of the voice call that is between the electronic device 201 and the remote party. For example, the one or more identifiers of a voice call may be associated with a voice call record. The text may be included within the associated voice call record that is displayable within the call history. Accordingly, a user of the electronic device 201 may view the text within the associated voice call record.

In at least some example embodiments, the one or more identifiers may be each associated with one or more interface elements within the GUI. In such example embodiments, a selection of the associated interface element may display the converted text. For example, a selection of the appropriate interface element may display the associated voice call record that includes the converted text.

As mentioned above, in at least some example embodiments, the electronic device 201 may detect a plurality of spoken phrases during a voice call which are then converted to text. For example, the electronic device 201 may detect more than one postal address, email address and/or phone number which are all converted. In such example embodiments, the electronic device 201, in displaying the converted text in association with an identifier of the voice call in a call history, may determine if the converted text of two or more of the plurality of spoken phrases are identical. For example, the electronic device 201 may determine if two or more detected postal addresses are identical by analyzing the converted text of the postal addresses. If it is determined that the converted text of two or more of the plurality of spoken phrases are identical, the electronic device 201 may display the text for only one of the identical spoken phrases. For example, the electronic device 201 may display the converted text of only one of the detected postal addresses that are identical. Accordingly, duplicated postal addresses (and/or phone numbers and/or email addresses) may not be displayed in the call history.

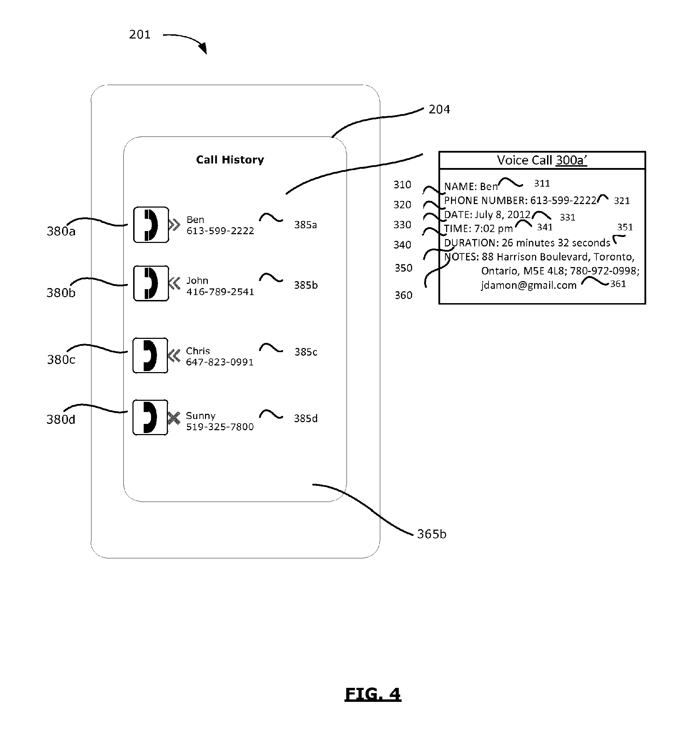

In at least some example embodiments, the GUI of the call history may be of the type described above with reference to FIG. 2. For example, the voice call record shown in FIG. 2 may include the converted text. That is, a selection of the associated interface element may display the voice call record and the converted text. Greater details of such an example embodiment are provided below with reference to FIG. 4 which shows another example display page of the call history.

In at least some example embodiments, the voice call between the electronic device 201 and the remote party may be associated with an event of a calendar application (for example, Microsoft Outlook^{®}). As mentioned above, a calendar application may allow events to be created. An event is an appointment and may include one or more event-characteristics. An event-characteristic defines information about the appointment. For example, the one or more event-characteristics may include a subject (which defines the topic of the event), attendees (*i.e.* the participants of the event), a location (*i.e.* the location of the event), a start time (*i.e.* the start time of the event), and an end time (*i.e.* the end time of the event). It will be appreciated that an event may include other event-characteristics not specifically described herein.

The voice call associated with the event of the calendar application may, for example, be scheduled based on the event. In such example embodiments, the electronic device 201, in displaying the converted text in association with an identifier of the voice call in a call history, may extract one or more event-characteristics from the event to define the identifier. That is, the identifier (which may identify the associated voice call) may include one or more of the event-characteristics. For example, the identifier may include one or more of a subject of the event, attendees of the event, a location of the event, a start time of the event, and/or an end time of the event. In at least some example embodiments, the identifier may, in addition to any one or more of the event-characteristics, include any one or more of the earlier mentioned identifiers such as the identity of the remote party, a phone number associated with the remote party's electronic device, duration of the voice call, date of the voice call, start time of the voice call, etc. Accordingly, any one of these identifiers of the voice call may be in association with the converted text and displayable in the call history.

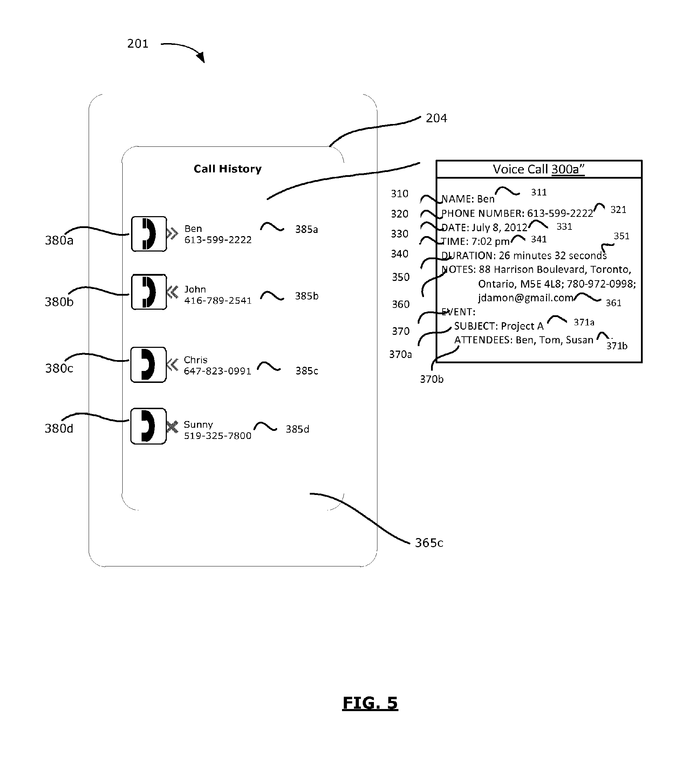

In at least some example embodiments, the extracted one or more event-characteristics may be included within an associated voice call record for the voice call. As noted above, in at least some example embodiments, the one or more identifiers of a voice call may be associated with a voice call record. Accordingly, the extracted event-characteristics may be included within the voice call record in addition to the converted text. The electronic device 201 may display the associated voice call record including the converted text and the extracted event-characteristics. Greater details of such an example embodiment are provided below with reference to FIG. 5 which shows a further example display page of the call history.

Reference is next made to FIG. 4, which shows another example display page of the call history. As mentioned above, FIG. 4 may illustrate the call history after method 400 is performed by the electronic device 201. The first new display page 365b may be a modification of display page 365a of FIG. 2 to include the converted text. The first new display page 365b includes most of the features of the display page 365a of FIG. 2. For example, the first new display page 365b includes the same list of interface elements 380a, 380b, 380c, 380d that are each associated with the same identifiers 385a, 385b, 385c, 385d. These interface elements 380a, 380b, 380c, 380d and the associated identifiers 385a, 385b, 385c, 385d for voice calls may be each associated with some of the same voice call records (for example, 300b, 300c, 300d).

A selection of the interface element 380a may display the associated first new voice call record 300a' on the first new display page 365b or on a different display page. The first new voice call record 300a' includes the same fields and information as voice call record 300a. Additionally, the first new voice call record 300a' includes a notes field 360. The notes field 360 may store the converted text 361. For example, spoken phrases in the voice call between a user of the electronic device and the remote party (*i.e.* "Ben") may have been detected, converted, stored and included within the first new voice call record 300a' for display in the call history. In the illustrated example, the converted text 361 in the first new voice call record 300a' includes a postal address, an email address and a phone number. Accordingly, the user of the electronic device 201 may view this information when accessing the first new voice call record 300a' in the call history.

In at least some example embodiments, the converted text 361 may be associated with one or more interface elements that are selectable to perform specific functions. For example, the email address within the converted text 361 may be associated with a messaging interface element. In response to receiving a selection of the messaging interface element (for example, by a user of the electronic device 201 via an input interface 206), a messaging application (such as, Microsoft Outlook^{®}) is initiated on the electronic device 201. In at least some example embodiments, the messaging application may further initiate a message that includes the email address. For example, the email address may be included within the destination of the message. As illustrated in FIG. 4, for example, the email address "jdamon@gmail.com" within the converted text 361 of the notes field 360, may be associated with a selectable interface element. A selection of the associated interface element initiates a messaging application (that may be associated with an email address of a user of the electronic device 201), and the messaging application may further initiate a new message with a destination field of the message being populated with the email address "jdamon@gmail.com". Accordingly, a user may input further information in the message and the message may be sent to the destination email address "jdamon@gmail.com" from the electronic device 201.

In at least some example embodiments, the phone number within the converted text 361 may be associated with a phone call interface element. In response to receiving a selection of the phone call interface element (for example, by a user of the electronic device 201 via an input interface 206), a further voice call may be initiated to the associated phone number from the electronic device 201. As illustrated in FIG. 4, for example, the phone number "780-972-0997" within the converted text 361 of the notes field 360, may be associated with a selectable interface element. A selection of the associated interface element initiates a voice call to the phone number "780-972-0997" from the electronic device 201. Accordingly, a user of the electronic device 201 may engage in a voice call with a user of an electronic device with the associated phone number, "780-972-0997".

In at least some example embodiment, the voice call may be initiated automatically (*i.e.* without the need for further user input) to the associated phone number upon receiving a selection of the phone call interface element. However, in other example embodiments, further input is required from a user via an input interface 206 in order to initiate the voice call to the associated phone number. For example, in at least some example embodiments, prior to initiating the voice call, a prompt may be presented via an output interface 205 (such as the display 204) requesting confirmation to initiate the voice call to the associated phone number. When confirmation is received by a user via an input interface 206 (such as a navigational input device), the voice call is initiated to the associated phone number.

Referring next to FIG. 5, a further example display page of the call history is shown. As noted above, FIG. 5 may illustrate the call history after a particular example embodiment of method 400 is performed where the voice call between the electronic device 201 and the remote party is associated with an event of a calendar application. The second new display page 365c may be a further modification of the display page 365a of FIG. 2 to include the converted text and one or more event-characteristics of the event. The second new display page 365c includes most of the features of the display page 365a of FIG. 2. For example, the second new display page 365c includes the same list of interface elements 380a, 380b, 380c, 380d that are each associated with the same identifiers 385a, 385b, 385c, 385d. These interface elements 380a, 380b, 380c, 380d and the associated identifiers 385a, 385b, 385c, 385d for voice calls may be each associated with some of the same voice call records (for example, 300b, 300c, 300d).

A selection of the interface element 380a may display the associated second new voice call record 300a" on the second new display page 365c or on a different display page. The second new voice call record 300a" includes the same fields and information as voice call record 300a. The second new voice call record 300a" also includes the converted text 361 as part of a notes field 360, which is similar to the first new voice call record 300a'. That is, the second new voice call record 300a" includes a postal address, an email address and a phone number which may have been converted during a voice call between a user of the electronic device and the remote party (*i.e.* "Ben"). Additionally, the second new voice call record 300a" includes an event field 370 which includes event sub-fields subject 370a and attendees 370b. The event sub-fields may store the associated event-characteristics. For example, the event sub-field subject 370a may store a topic 371a of the event, and the event sub-field attendees 370b may store participants 371b of the event. The electronic device 201 may have extracted the information within the event sub-fields from the event in the calendar application and included the information within the second new voice call record 300a" when performing method 400 of FIG. 3. The associated event-characteristics may be viewed by a user of the electronic device 201 accessing the second new voice call record 300a" in the call history.

It will be appreciated from the foregoing description that the present application provides a convenient and helpful mechanism for remembering and accessing potentially important pieces of spoken data after conclusion of a voice call, using the GUI display of a call history. By displaying the converted text 361 of spoken phrases during a voice call between a user of the electronic device 201 and a remote party in a call history of a GUI (as illustrated in FIGs. 4 and 5), the converted text 361 is readily accessible and viewable by the user of the electronic device 201. For example, a postal address, email address and/or a phone number included in the converted text 361 may be easily retrievable by the user (by accessing the call history) and presented to the user in an identifiable manner (by displaying the converted text 361 in association with an identifier of the voice call within the call history) on the display 204, at any time after the voice call is completed.

While the present application is primarily described in terms of methods, a person of ordinary skill in the art will understand that the present application is also directed to various apparatus such as an electronic device 201 including a mobile communications device. The electronic device 201 includes components for performing at least some of the aspects and features of the described methods, which may be by way of hardware components (such as the memory 244 and/or the processor 240), software or any combination of the two, or in any other manner. Moreover, an article of manufacture for use with the apparatus, such as a prerecorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present application.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray™ Disc, and a solid state storage device (e.g., NAND flash or synchronous dynamic RAM (SDRAM)).

Example embodiments of the present application are not limited to any particular operating system, system architecture, mobile device architecture, server architecture, or computer programming language.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

## Claims

1. A method implemented by a processor (240) of an electronic device (201) for storing recognized phrases during a voice call between the electronic device (201) and a remote party, the electronic device (201) having a display (204), the method comprising:
determining that a spoken phrase during the voice call is within a pre-determined category of information;
converting the spoken phrase to text;
storing the text in association with the voice call; and
displaying in a graphical user interface a call history identifying previous voice calls, including an identifier of the voice call, wherein the display (204) includes displaying the text in association with the identifier of the voice call.

2. The method of claim 1, wherein the identifier is associated with an interface element on the graphical user interface, and wherein the text is displayed in response to receiving a selection of the interface element.

3. The method of any one of claims 1 or 2, wherein determining includes determining a plurality of spoken phrases, and converting includes converting the plurality of spoken phrases to text.

4. The method of claim 3, wherein displaying includes determining that the converted text of two or more of the plurality of spoken phrases is identical, and wherein the display (204) includes displaying the converted text for only one of the identical spoken phrases.

5. The method of any one of claims 1 to 4, wherein the voice call is associated with an event of a calendar application, and wherein displaying includes extracting one or more event-characteristics from the event to define the identifier.

6. The method of any one of claim 1 or 2, wherein converting includes converting speech during the voice call to text information and wherein determining includes searching the text information for phrases that fall within the pre-determined category of information.

7. The method of any one of claims 1 to 5, wherein determining includes detecting that the spoken phrase falls within the pre-determined category of information and, in response, said converting is performed.

8. The method of any one of claims 1 to 7, wherein said determining is partly based on a detected geographic location of the electronic device (201).

9. The method of any one of claims 1 to 8, wherein the pre-determined category of information includes one of a postal address, an email address and a phone number.

10. The method of claim 9, wherein the displayed text includes the email address, the email address is associated with a messaging interface element, and wherein a messaging application is initiated in response to receiving a selection of the messaging interface element.

11. The method of claim 9, wherein the displayed text includes the phone number, the phone number is associated with a phone call interface element, and wherein a further voice call is initiated to the phone number in response to receiving a selection of the phone call interface element.

12. An electronic device (201) being configured to store recognized phrases during a voice call between the electronic device (201) and a remote party, the electronic device (201) comprising:
a display (204);
a memory (244); and
a processor (240) coupled with the display (204) and the memory (244), the processor (240) being configured to perform the method of any one of claims 1 to 11.

13. A computer-readable medium storing computer-executable instructions which, when executed, configure a processor to perform the method of any one of claims 1 to 11.

14. A method implemented by a processor (240) of an electronic device (201) for storing recognized phrases during a voice call between the electronic device (201) and a remote party, the electronic device (201) having a display (204), the method comprising:
establishing a connection with a second electronic device;
receiving text from the second electronic device, wherein the received text is based on the second electronic device determining that a spoken phrase during the voice call is within a pre-determined category of information, and converting the spoken phrase to text;
storing the text in association with the voice call; and
displaying in a graphical user interface a call history identifying previous voice calls, including an identifier of the voice call, wherein the display (204) includes displaying the text in association with the identifier of the voice call.

## Amended claims

### Amended claims in accordance with Rule 137(2) EPC.

**1.** A method implemented by a processor (240) of an electronic device (201) for storing recognized phrases during a voice call between the electronic device (201) and a remote party, the electronic device (201) having a display (204), the method comprising:
determining that a spoken phrase during the voice call is within a pre-determined category of information;
extracting one or more event-characteristics from a calendared event to define an identifier for the voice call;
converting the spoken phrase to text;
storing the text in association with the voice call; and
displaying in a graphical user interface a call history identifying previous voice calls, and also the text in association with the identifier of the voice call.

**2.** The method of claim 1, wherein the identifier is associated with an interface element on the graphical user interface, and wherein the text is displayed in response to receiving a selection of the interface element.

**3.** The method of any one of claims 1 or 2, wherein determining includes determining a plurality of spoken phrases, and converting includes converting the plurality of spoken phrases to text.

**4.** The method of claim 3, wherein displaying includes determining that the converted text of two or more of the plurality of spoken phrases is identical, and wherein the display (204) includes displaying the converted text for only one of the identical spoken phrases.

**5.** The method of any one of claim 1 or 2, wherein converting includes converting speech during the voice call to text information and wherein determining includes searching the text information for phrases that fall within the pre-determined category of information.

**6.** The method of any one of claims 1 to 4, wherein determining includes detecting that the spoken phrase falls within the pre-determined category of information and, in response, said converting is performed.

**7.** The method of any one of claims 1 to 6, wherein said determining is partly based on a detected geographic location of the electronic device (201).

**8.** The method of any one of claims 1 to 7, wherein the pre-determined category of information includes one of a postal address, an email address and a phone number.

**9.** The method of claim 8, wherein the displayed text includes the email address, the email address is associated with a messaging interface element, and wherein a messaging application is initiated in response to receiving a selection of the messaging interface element.

**10.** The method of claim 8, wherein the displayed text includes the phone number, the phone number is associated with a phone call interface element, and wherein a further voice call is initiated to the phone number in response to receiving a selection of the phone call interface element.

**11.** An electronic device (201) being configured to store recognized phrases during a voice call between the electronic device (201) and a remote party, the electronic device (201) comprising:
a display (204);
a memory (244); and
a processor (240) coupled with the display (204) and the memory (244), the processor (240) being configured to perform the method of any one of claims 1 to 10.

**12.** A computer-readable medium storing computer-executable instructions which, when executed, configure a processor to perform the method of any one of claims 1 to 10.

**13.** A method implemented by a processor (240) of a first electronic device (201) and a second electronic device for storing recognized phrases during a voice call between the first electronic device (201) and a remote party, the first electronic device (201) having a display (204), the method comprising:
establishing a connection between the first electronic device (201) and the second electronic device;
monitoring, at the second electronic device, the voice call between the first electronic device (201) and the remote party;
determining, at the second electronic device, that a spoken phrase during the voice call is within a pre-determined category of information;
converting, at the second electronic device, the spoken phrase to text;
extracting at the second electronic device one or more event-characteristics from a calendared event to define an identifier for the voice call;
receiving the converted text at the first electronic device (201) from the second electronic device;
storing, at the first electronic device (201), the text in association with the voice call; and
displaying on the display (204) of the first electronic device (201) a graphical user interface of a call history identifying previous voice calls, including the text in association with the identifier of the voice call.
